# EUROPÄISCHE PATENTSCHRIFT

(11) **EP 2 528 803 B1**
(45) Veröffentlichungstag und Bekanntmachung des Hinweises auf die Patenterteilung: **11.12.2013**
(21) Anmeldenummer: 12707759.2
(22) Anmeldetag: 07.03.2012
(51) Int. Cl.: B62D 25/07, B60R 13/07, B62D 29/00

(54) **DACHANORDNUNG UND VERFAHREN ZUR HERSTELLUNG EINER DACHANORDNUNG**
ROOF ARRANGEMENT AND METHOD FOR PRODUCING A ROOF ARRANGEMENT
ENSEMBLE TOIT OUVRANT ET SON PROCEDE DE PRODUCTION

(30) Priorität: 14.03.2011 DE 102011013819
(43) Veröffentlichungstag der Anmeldung: 05.12.2012
(73) Patentinhaber: Webasto SE, 82131 Stockdorf (DE)
(72) Erfinder: SCHRÖFERL, Thomas, 82069 Hohenschäftlarn (DE)
(74) Vertreter: Epping - Hermann - Fischer
(86) Internationale Anmeldenummer: PCT/EP2012/053916
(87) Internationale Veröffentlichungsnummer: WO 2012/123309

(56) Entgegenhaltungen:
- EP-A1- 1 310 394
- DE-A1- 19 939 978
- DE-A1-102004 007 988
- JP-A- 11 170 927
- US-A1- 2006 152 043

## Beschreibung

Die Erfindung betrifft Dachanordnung mit einem Deckel zum Verschließen der Öffnung eines Fahrzeugdachs und einem Befestigungsblech, das mit dem Deckel verbunden ist zur Befestigung des Deckels an dem Fahrzeugdach, wobei das Befestigungsblech teilweise mit einem Kunststoffmaterial umspritzt ist, sodass durch das Kunststoffmaterial auf der Oberseite des Blechs eine Wasserrinne ausgebildet ist. Die JP 11 170 927 offenbart eine solche Dachanordnung.

Bei derartigen Dachanordnungen handelt es sich oftmals um feststehende Deckelelemente aus Glas. Im Randbereich des Deckels ist zwischen diesem und dem Fahrzeugdach in der Regel eine Dichtung angeordnet, jedoch ist diese nicht zur vollständigen Abdichtung des Glasdeckels gegenüber dem Fahrzeugdach geeignet. Um dennoch eindringendes Wasser kontrolliert ableiten zu können, ist unter dem Spalt zwischen Deckel und Fahrzeugdach eine Wasserrinne vorgesehen, die das eindringende Wasser sammelt und von einem Endbereich der Wasserrinne durch einen Abfluss ableitet.

Es ist bekannt, auf der Unterseite des Deckels eine Sichtblende anzuformen, damit die Bereiche, in denen das Befestigungsblech mit dem Fahrzeugdach verbunden ist, vom Fahrzeuginnenraum aus nicht sichtbar sind. Die Herstellung einer derartigen Dachanordnung ist verhältnismäßig aufwändig, da die Anordnung aus Deckel und Befestigungsblech von beiden Seiten umspritzt werden muss. Zudem ist eine solche Volumenumspritzung mit hohem Materialeinsatz verbunden.

In der Vergangenheit wurden daher Sichtblenden auf der Unterseite des Befestigungsblechs angeklebt. Auf diese Weise war es ausreichend, die Anordnung aus Deckel und Befestigungsblech nur auf der Oberseite zu umschäumen, wobei bei einer solchen Teilumschäumung der Deckel mit dem Befestigungsblech verbunden und gleichzeitig die Wasserrinne ausgebildet wurde.

Es ist Aufgabe der Erfindung, eine Dachanordnung anzugeben, die auf der Oberseite eine Wasserrinne und auf der Unterseite eine Sichtblende aufweist, die jedoch kostengünstiger herzustellen ist. Zudem ist Aufgabe der Erfindung, ein kostengünstigeres Verfahren zur Herstellung einer Dachanordnung anzugeben.

Diese Aufgabe wird durch eine Dachanordnung der eingangs genannten Art gelöst, die dadurch gekennzeichnet ist, dass auf der Unterseite des Befestigungsblechs eine angespritzte Sichtblende ausgebildet ist und das Befestigungsblech im Bereich der Sichtblende mindestens eine Ausnehmung aufweist, durch die das Kunststoffmaterial der Wasserrinne und der Sichtblende miteinander verbunden sind.

Bezüglich des Verfahrens wird die Aufgabe durch ein Verfahren zur Herstellung einer Dachanordnung mit einem Deckel und einem Befestigungsblech gelöst, wobei das Verfahren die Schritte aufweist:
- Einlegung des Befestigungsblechs und des Deckels in eine Halterung,
- Ansetzen einer Spritzgussform auf der Oberseite der Anordnung aus Deckel und Befestigungsblech,
- Ansetzen einer Spritzgussform auf der Unterseite der Anordnung aus Deckel und Befestigungsblech,
- Zuführen von weichem Kunststoffmaterial zu einer Kavität auf der oberen oder unteren Seite des Befestigungsblechs, sodass das Kunststoffmaterial auf der Oberseite des Befestigungsblechs dieses mit dem Deckel verbindet und eine Wasserrinne ausbildet und auf der Unterseite des Befestigungsblechs eine Sichtblende ausbildet, wobei das Kunststoffmaterial durch eine Ausnehmung des Befestigungsblechs im Bereich der Sichtblende von einer Seite des Befestigungsblechs auf die andere Seite gelangen kann.

Die erfindungsgemäße Dachanordnung weist also eine Sichtblende auf, die durch Umschäumen oder Umspritzen hergestellt werden kann. Es sind dadurch keine separaten Teile oder Montageschritte erforderlich. Dennoch kann auf eine materialintensive und aufwändige Vollumschäumung verzichtet werden. Durch die erfindungsgemäß vorgesehenen Ausnehmungen im Befestigungsblech kann Kunststoffmaterial bei der Umschäumung der Oberseite des Befestigungsblechs auf die Unterseite gelangen und dort die Sichtblende bilden. Es genügt also ein einziger Schäumvorgang, der entweder von der Oberseite her oder von der Unterseite her ausgeführt werden kann.

Die Begriffe "umspritzen" und "umschäumen" werden im Zusammenhang mit der Beschreibung der Erfindung synonym verwendet, da sie lediglich je nach verwendetem Kunststoff unterschiedlich gebraucht werden. Die Erfindung kann jedoch mit unterschiedlichen Kunststoffen eingesetzt werden, so dass beide Begriffe zur Anwendung kommen können.

Besonders vorteilhaft ist, wenn das Befestigungsblech zwei Ausnehmungen in Bereichen der Sichtblende aufweist. Dadurch kann sich der Kunststoffmaterialstrom beim Zuführen des Kunststoffmaterials in die Spritzgussformen bei der ersten Ausnehmung auf die Oberseite und Unterseite aufteilen und im anderen Endbereich der Sichtblende können die Materialströme wieder zusammengeführt werden.

Weiter vorteilhafte Ausgestaltungen der Erfindung sind in den Unteransprüchen angegeben.

Die Erfindung wird nachfolgend anhand eines Ausführungsbeispiels näher erläutert. Es zeigen:
- Figur 1: einen Querschnitt durch den Randbereich eines Deckels und ein mit dem Deckel verbundenes Befestigungsblech,
- Figur 2: einen Querschnitt durch den Randbereich der Anordnung aus Deckel und Befestigungsblech im Angussbereich und
- Figur 3: einen Querschnitt durch den Randbereich der Anordnung aus Deckel und Befestigungsblech im anderen Endbereich der Sichtblende.

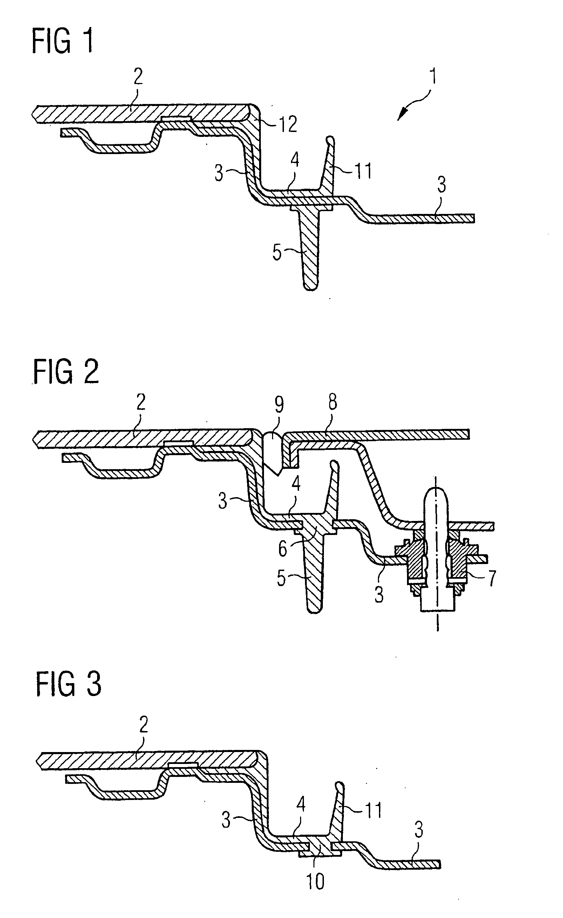

Bei dem in der Figur 1 dargestellten Ausführungsbeispiel der Erfindung ist eine Dachanordnung gezeigt, bei der ein Glasdeckel 2 mit einem Befestigungsblech 3 durch eine Umspritzung 12 verbunden ist. Die Umspritzung 12 füllt einen Spalt zwischen dem Befestigungsblech 3 und dem Glasdeckel 2 und umschließt gleichzeitig die Kante des Glasdeckels. Die Umspritzung ist auf der Oberfläche des Befestigungsblechs 3 weitergeführt und bildet dort eine U-förmige Rinne, die im eingebauten Zustand in einem Fahrzeug als Wasserrinne 4 dient. Im Bereich der Wasserrinne 4 ist auf der Unterseite des Befestigungsblechs eine Sichtblende 5 angeformt. Diese ist wie die Wasserrinne 4 auf der Oberseite im Spritzgussverfahren hergestellt. Abgesehen von der Sichtblende 5 ist auf der Unterseite des Befestigungsblechs 3 keine Umspritzung vorgesehen. Insgesamt kann die Anordnung mit einem minimalen Einsatz an Kunststoffmaterial realisiert werden.

Das Kunststoffmaterial für die Umschäumung basiert auf einem Polyurethan; es können jedoch gegebenenfalls auch andere Kunststoffe verwendet werden.

Gemäß der Erfindung ist, wie in Figur 2 zu erkennen, in dem Befestigungsblech 3 eine Ausnehmung 6 vorgesehen, durch die das Kunststoffmaterial der Wasserrinne 4 und der Sichtblende 5 miteinander in Verbindung stehen. Der dargestellte Schnitt befindet sich in einem Endbereich der Sichtblende 5. Es handelt sich um den Bereich, in dem bei der Herstellung der Dachanordnung der Anguss erfolgt. Eingefülltes Kunststoffmaterial kann, wenn sich die Angussstelle auf der Oberseite des Befestigungsblechs 3 befindet, durch die Ausnehmung 6 auf die Unterseite gelangen und dort die Sichtblende 5 ausbilden.

Bei der Herstellung sind auf der Ober- und Unterseite Spritzgussformen angebracht, die Kavitäten ausweisen, die genau die Wasserrinne und die Sichtblende als Negativform darstellen. Das eingefüllte Kunststoffmaterial, welches auf die Unterseite des Befestigungsblechs in die dortige Kavität gelangt, füllt diese also aus und verdrängt dabei die sich in der Kavität befindliche Luft. Daher müssen entweder Entlüftungskanäle in der Spritzgussform vorgesehen sein oder, wie von der Erfindung bevorzugt, befindet sich im anderen Endbereich der Sichtblende 5 eine weitere Ausnehmung 10 in dem Befestigungsblech, wie in der Figur 3 dargestellt ist. An dieser Stelle kann die Luft aus der Kavität der unteren Spritzgussform wieder nach oben entweichen.

Das in dem in Figur 2 dargestellten Endbereich eingefüllte Kunststoffmaterial teilt sich in zwei Materialströme auf, wobei ein Materialstrom auf der Oberseite die Umspritzung 12 im Randbereich des Deckels 2 sowie die Wasserrinne ausbildet und der andere Materialstrom auf der Unterseite die Sichtblende 5 ausbildet. Im Bereich der Ausnehmung 10 laufen die Materialströme wieder zusammen, sodass die Kavitäten auf der Ober- und Unterseite des Befestigungsblechs 3 vollständig ausgefüllt werden können.

In der Figur 2 ist zudem dargestellt, wie die Anordnung aus Deckel 2 und Befestigungsblech 3 in einem Fahrzeug befestigt ist. Auf der dem Deckel 2 abgewandten Seite der Sichtblende 5 befindet sich eine Befestigungsvorrichtung 7, über die das Befestigungsblech höheneinstellbar mit einem Fahrzeugdach 8 verbunden werden kann. Es handelt sich bevorzugt um eine geschraubte Verbindung, wobei die Schraube gleichzeitig als Höheneinstellschraube dient. Das Fahrzeugdach 8 ist im Bereich eines Spalts zwischen Fahrzeugdach 8 und Deckel 2 abgewinkelt. In diesem Bereich ist eine zusätzliche Dichtung 9 vorgesehen, welche das Eindringen von insbesondere Schmutz in die Wasserrinne 4 verhindert. Auch wird Wasser daran gehindert, durch den Spalt in das Fahrzeuginnere einzudringen. Da jedoch keine 100 %-ige Dichtigkeit gewährleistet werden kann, stellt, wie eingangs beschrieben, die Wassserrinne 4 sicher, dass eingedrungenes Wasser aufgefangen und zuverlässig abgeleitet wird.

Das beschriebene Ausführungsbeispiel ist exemplarisch zu verstehen. Abwandlungen sind vom Schutzbereich umfasst. Insbesondere ist es möglich, den Schenkel 11 der Wasserrinne 4 nach oben zu verlängern, sodass er mit dem Fahrzeugdach 8 in Kontakt gelangen kann, wie bei Betrachtung der Figur 2 leicht erkennbar ist. Dadurch kann eine zusätzliche Abdichtung des Verbindungsbereichs zwischen dem Glasdeckel 2 und dem Fahrzeugdach 8 erfolgen. Dies ist insbesondere im Ablaufbereich der Wasserrinne 4 von Vorteil, wo sich gegebenenfalls eindringendes Wasser stauen kann.

## Patentansprüche

1. Dachanordnung (1) mit
einem Deckel (2) zum Verschließen der Öffnung eines Fahrzeugdachs (8) und
einem Befestigungsblech (3), das mit dem Deckel (2) verbunden ist zur Befestigung des Deckels (2) an dem Fahrzeugdach (8), wobei das Befestigungsblech teilweise mit einem Kunststoffmaterial umspritzt ist, sodass durch das Kunststoffmaterial auf der Oberseite des Blechs eine Wasserrinne ausgebildet ist, **dadurch gekennzeichnet, dass**
auf der Unterseite des Befestigungsblechs (3) eine angespritzte Sichtblende (5) ausgebildet ist und
das Befestigungsblech (3) im Bereich der Sichtblende (5) mindestens eine Ausnehmung (6, 10) aufweist, durch die das Kunststoffmaterial der Wasserrinne (4) und der Sichtblende (5) miteinander verbunden sind.

2. Dachanordnung nach Anspruch 1,
**dadurch gekennzeichnet, dass**
das Befestigungsblech (3) auf der dem Deckel (2) abgewandten Seite eine Vorrichtung (7) zur Höheneinstellung aufweist.

3. Dachanordnung nach einem der Ansprüche 1 oder 2,
**dadurch gekennzeichnet, dass**
in zwei Endbereichen der Sichtblende (5) jeweils eine Ausnehmung (6, 10) vorgesehen ist.

4. Dachanordnung nach einem der Ansprüche 1 bis 3,
**dadurch gekennzeichnet, dass**
das Befestigungsblech (3) auf der Unterseite abgesehen von der Sichtblende (5) frei von Kunststoffumspritzungen ist.

5. Verfahren zur Herstellung einer Dachanordnung (1) mit einem Deckel (2) und einem Befestigungsblech (3), **gekennzeichnet durch** die Schritte:
- Einlegen des Befestigungsblechs (3) und des Deckels (2) in eine Halterung,
- Ansetzen einer Spritzgussform auf der Oberseite der Anordnung aus Deckel (2) und Befestigungsblech (3),
- Ansetzen einer Spritzgussform auf der Unterseite der Anordnung aus Deckel (2) und Befestigungsblech (3),
- Zuführen von Kunststoffmaterial zu einer Kavität auf der oberen oder unteren Seite des Befestigungsblechs (3), sodass das Kunststoffmaterial auf der Oberseite des Befestigungsblechs dieses mit dem Deckel (2) verbindet und eine Wasserrinne (4) ausbildet und auf der Unterseite des Befestigungsblechs (3) eine Sichtblende (5) ausbildet, wobei das Kunststoffmaterial **durch** eine Ausnehmung (6, 10) des Befestigungsblechs (3) im Bereich der Sichtblende (5) von einer Seite des Befestigungsblechs (3) auf die andere Seite gelangen kann.

6. Verfahren nach Anspruch 5,
**dadurch gekennzeichnet, dass**
die Angussstelle sich auf der Oberseite des Befestigungsblechs (3) befindet.

7. Verfahren nach Anspruch 5 oder 6,
**dadurch gekennzeichnet, dass**
zwei Ausnehmungen (6, 10) jeweils in einem Endbereich der Sichtblende (5) vorgesehen sind, wobei sich beim Einfüllen des Kunststoffmaterials der Kunststoffmaterialstrom bei der ersten Ausnehmung (6) in zwei Kunststoffmaterialströme aufteilt und die beiden Kunststoffmaterialströme bei der zweiten Ausnehmung (10) wieder zusammengeführt werden.

## Claims

1. Roof arrangement (1) having a cover (2) for closing the opening in a vehicle roof (8) and a fixing plate (3), which is connected to the cover (2) for fixing the cover (2) to the vehicle roof (8), wherein the fixing plate is partially inset molded with a plastic material, so that the plastic material forms a water channel on the upper side of the plate, **characterized in that** an injection-molded masking piece (5) is formed on the underside of the fixing plate (3) and the fixing plate (3) in the area of the masking piece (5) has at least one aperture (6, 10), through which the plastic material of the water channel (4) and of the masking piece (5) can be connected to one another.

2. Roof arrangement according to Claim 1, **characterized in that** the fixing plate (3) comprises a device (7) for height adjustment on the side remote from the cover (2).

3. Roof arrangement according to either of Claims 1 or 2, **characterized in that** an aperture (6, 10) is provided in each of two end areas of the masking piece (5).

4. Roof arrangement according to one of Claims 1 to 3, **characterized in that** apart from the masking piece (5) the fixing plate (3) is free of plastic inset moldings on the underside.

5. Method for producing a roof arrangement (1) having a cover (2) and a fixing plate (3), **characterized by** the steps:
- inserting the fixing plate (3) and the cover (2) into a holder,
- applying an injection mold to the upper side of the arrangement comprising a cover (2) and a fixing plate (3),
- applying an injection mold to the underside of the arrangement comprising a cover (2) and a fixing plate (3),
- feeding plastic material to a cavity on the upper side or the underside of the fixing plate (3), so that the plastic material on the upper side of the fixing plate connects this to the cover (2) and forms a water channel (4), and on the underside of the fixing plate (3) forms a masking piece (5), the plastic material being able to pass from one side of the fixing plate (3) to the other through an aperture (6, 10) of the fixing plate (3) in the area of the masking piece (5).

6. Method according to Claim 5, **characterized in that** the molded attachment site is situated on the upper side of the fixing plate (3).

7. Method according to Claim 5 or 6, **characterized in that** two apertures (6, 10) are provided each in an end area of the masking piece (5), the plastic material flow, when feeding in the plastic material, being divided at the first aperture (6) into two plastic material flows, and the two plastic material flows being recombined at the second aperture (10).

## Revendications

1. Agencement de toit (1) comprenant
un couvercle (2) pour fermer l'ouverture d'un toit de véhicule (8) et
une tôle de fixation (3) qui est connectée au couvercle (2) pour fixer le couvercle (2) au toit de véhicule (8), la tôle de fixation étant en partie surmoulée avec un matériau en plastique de telle sorte qu'une rigole d'eau soit réalisée par le matériau en plastique sur le côté supérieur de la tôle,
**caractérisé en ce**
**qu'**un cache (5) moulé par injection est réalisé sur le côté inférieur de la tôle de fixation (3) et
la tôle de fixation (3) présente, dans la région du cache (5), au moins un évidement (6, 10) à travers lequel sont connectés l'un à l'autre le matériau en plastique de la rigole d'eau (4) et le cache (5).

2. Agencement de toit selon la revendication 1, **caractérisé en ce que**
la tôle de fixation (3) présente, sur le côté opposé au couvercle (2), un dispositif (7) d'ajustement en hauteur.

3. Agencement de toit selon l'une quelconque des revendications 1 ou 2,
**caractérisé en ce**
**qu'**un évidement (6, 10) est à chaque fois prévu dans deux régions d'extrémité du cache (5).

4. Agencement de toit selon l'une quelconque des revendications 1 à 3,
**caractérisé en ce que**
la tôle de fixation (3), à l'exception du cache (5), est exempte de surmoulages en plastique sur le côté inférieur.

5. Procédé de fabrication d'un agencement de toit (1) comprenant un couvercle (2) et une tôle de fixation (3),
**caractérisé par** les étapes suivantes :
- insertion de la tôle de fixation (3) et du couvercle (2) dans une fixation,
- application d'un moule de moulage par injection sur le côté supérieur de l'agencement constitué du couvercle (2) et de la tôle de fixation (3),
- application d'un moule de moulage par injection sur le côté inférieur de l'agencement constitué du couvercle (2) et de la tôle de fixation (3),
- apport de matériau en plastique à une cavité sur le côté supérieur ou le côté inférieur de la tôle de fixation (3), de telle sorte que le matériau en plastique sur le côté supérieur de la tôle de fixation relie cette dernière au couvercle (2) et constitue une rigole d'eau (4) et constitue, sur le côté inférieur de la tôle de fixation (3), un cache (5), le matériau en plastique pouvant parvenir, par un évidement (6, 10) de la tôle de fixation (3) dans la région du cache (5), depuis un côté de la tôle de fixation (3) jusqu'à l'autre côté.

6. Procédé selon la revendication 5,
**caractérisé en ce que**
le point de coulée se trouve sur le côté supérieur de la tôle de fixation (3).

7. Procédé selon la revendication 5 ou 6,
**caractérisé en ce que**
deux évidements (6, 10) sont à chaque fois prévus dans une région d'extrémité du cache (5), le flux de matériau en plastique, lors du remplissage avec le matériau en plastique, se divisant au niveau du premier évidement (6) en deux flux de matériau en plastique et les deux flux de matériau en plastique étant à nouveau réunis au niveau du deuxième évidement (10).
